# EUROPÄISCHE PATENTANMELDUNG

(11) **EP 4 674 241 A1**
(43) Veröffentlichungstag der Anmeldung: **07.01.2026**
(21) Anmeldenummer: 25174721.8
(22) Anmeldetag: 07.05.2025
(51) Int. Cl.: A01B 15/04, A01B 23/02

(54) **LEICHTGEWICHTIGE GÄNSEFUSSSCHAR**

(30) Priorität: 05.07.2024 AT 505532024
(71) Anmelder: Boehlerit GmbH & Co. KG., 8605 Kapfenberg (AT)
(72) Erfinder: Burböck, Hannes, 8652 Kindberg (AT); Bärnthaler, Walter, 8641 St. Marein im Mürztal (AT)
(74) Vertreter: Wirnsberger & Lerchbaum Patentanwälte OG

(57) **Zusammenfassung**

Die Erfindung betrifft ein Bodenbearbeitungsgerät (1), insbesondere Schar, zur landwirtschaftlichen Aufbereitung von Erdreich, insbesondere zum flächigen Schneiden von Erdreich, umfassend einen Grundkörper (2) sowie auf diesem angeordnete Schneidelemente (3), wobei der Grundkörper (2) zumindest eine stirnseitige Trägerfläche (4) und zumindest eine Gleitfläche (5) aufweist, wobei auf der zumindest einen Trägerfläche (4) Schneidelemente (3) angeordnet sind und wobei über die zumindest eine Gleitfläche (5) Erdreich abgleiten kann, wobei die zumindest eine Trägerfläche (4) an die zumindest eine Gleitfläche (5) abgekantet anschließt. Um ein leichtes und dennoch im Einsatz stabiles Bodenbearbeitungsgerät (1) zu schaffen, ist erfindungsgemäß vorgesehen, dass die zumindest eine Gleitfläche (5) an einer Rückseite (7) zumindest bereichsweise abgekantet ist.

## Beschreibung

Die Erfindung betrifft ein Bodenbearbeitungsgerät, insbesondere Schar, zur landwirtschaftlichen Aufbereitung von Erdreich, insbesondere zum flächigen Schneiden von Erdreich, umfassend einen Grundkörper sowie auf diesem angeordnete Schneidelemente, wobei der Grundkörper zumindest eine stirnseitige Trägerfläche und zumindest eine Gleitfläche aufweist, wobei auf der zumindest einen Trägerfläche Schneidelemente angeordnet sind und wobei über die zumindest eine Gleitfläche Erdreich abgleiten kann, wobei die zumindest eine Trägerfläche an die zumindest eine Gleitfläche abgekantet anschließt.

Ein Bodenbearbeitungsgerät der eingangs genannten Art, insbesondere eine Schar wie eine Gänsefußschar, ist aus der EP 3 837 934 A1 bekannt geworden. Eine Schar dieser Art zeichnet sich dadurch aus, dass aufgrund der Ausbildung mit Trägerflächen für Schneidelemente und zu einem hinteren Ende der Schar relativ zu einem ebenen Erdreich schräg nach oben ansteigenden Gleitflächen, welche an die Trägerflächen anschließen, ein guter Schnitt zur Durchtrennung von unerwünschtem Unkraut erreicht werden kann, wobei aufgrund der Beabstandung der Gleitflächen zum Erdreich das geschnittene Erdreich aber nicht verschmiert und somit nicht für einen Wassereintritt verschlechtert wird. Dabei sind auf zwei Trägerflächen Schneidelemente angeordnet, die für einen Eingriff in das Erdreich sorgen. Über die zwei an die Trägerflächen anschließenden Gleitflächen wird abgetrenntes Erdreich abgeführt, wenn die Gänsefußschar Erdreich und Unkraut darin trennt und damit das Erdreich aufbereitet.

Scharen dieser Art können für den Einsatz an Federzinken befestigt werden, die Teil einer landwirtschaftlichen Maschine einschließlich eines Zuggerätes sind. Die Federzinken schwingen während eines Einsatzes bzw. Betriebes, was gewünscht ist, um eine geeignete Krümmelung des bearbeiteten Erdreichs zu erreichen. Dabei werden die Scharen stark beansprucht, was eine entsprechend starke Ausbildung derselben erfordert. Neben dem hierfür für den Grundkörper erforderlichen Materialbedarf führt dies zu schweren Arbeitsgeräten, welche im Betrieb zum Ziehen mehr Energie erfordern. Besonders nachteilig ist allerdings auch, dass die Federzinken ebenfalls stärker zu fertigen sind, um die schweren Scharen geeignet tragen zu können. Somit zieht die erforderliche Stabilität der Scharen und deren massive Ausbildung den weiteren Nachteil mit sich, dass auch die Federzinken geeignet stark auszulegen sind.

Hier setzt die Erfindung an. Aufgabe der Erfindung ist es, ein Bodenbearbeitungsgerät der eingangs genannten Art, insbesondere eine Schar wie eine Gänsefußschar, derart weiterzubilden, dass diese bei leichtgewichtiger Ausbildung die erforderliche Stabilität für einen Einsatz aufweist.

Diese Aufgabe wird gelöst, wenn bei einem Bodenbearbeitungsgerät der eingangs genannten Art die zumindest eine Gleitfläche an einer Rückseite zumindest bereichsweise abgekantet ist.

Mit der erfindungsgemäßen Lösung wird der Vorteil erzielt, dass durch die zumindest bereichsweise Abkantung an der Rückseite der zumindest einen Gleitfläche eine zusätzliche Versteifung des Grundkörpers gegeben ist, was zu einer besonders stabilen Ausbildung des Grundkörpers führt. Dies ist insofern überraschend, als die Rückseite des Grundkörpers im Einsatz mit dem aufzubereitenden Erdreich nicht schneidend in Kontakt kommt. Durch die höhere Stabilität kann der Grundkörper bei einer üblichen stirnseitigen Schneidbreite von 200 mm mit deutlich weniger Masse ausgebildet sein. Während der Grundkörper, der üblicherweise aus einem Stahl gefertigt ist, gemäß dem Stand der Technik eine Masse von etwa 2,5 kg aufweist, kann der Grundkörper erfindungsgemäß mit einer Masse von 1,5 kg hergestellt werden, ohne dass im Einsatz Nachteile bei der Standzeit gegeben wären. Die rückseitige Kante oder gegebenenfalls mehrere Kanten stellen somit eine einfach umsetzbare Maßnahme dar, deren Aufwand in der Produktion zu einem überproportionalen Nutzen führt.

Die zumindest eine Gleitfläche ist bevorzugt an der Rückseite über deren gesamte Breite der Rückseite abgekantet. Sind mehrere Gleitflächen vorgesehen, können diese allesamt an der jeweiligen Rückseite zumindest bereichsweise, vorzugsweise über deren jeweils vollständige Rückseitenlänge, abgekantet sein. Dabei kann jede Gleitfläche jeweils an eine Trägerfläche anschließen. Im Anschlussbereich einer Gleitfläche an eine Trägerfläche ist diese in der Regel gleich breit ausgebildet.

Bevorzugt schließt die zumindest eine Gleitfläche mit einem Winkel an die zumindest eine Trägerfläche an, sodass sich von der zumindest einen Trägerfläche weg ein Abstand der zumindest einen Gleitfläche relativ zu einer gedanklichen Bezugsebene bis zu einer Abkantung an der Rückseite vergrößert. Dadurch ist sichergestellt, dass im Bereich hinter einem Eingriffsbereich in zu schneidendes bzw. aufzubereitendes Erdreich der Grundkörper grundsätzlich nicht oder zumindest nicht durchgehend mit dem Erdreich in Kontakt kommt. Dadurch wird vermieden, dass der Grundkörper auf bereits geschnittenes Erdreich drückt und damit das geschnittene Erdreich wieder verschmiert oder gar kompaktiert, was einen späteren Wassereintritt erschwert, der für ein Pflanzenwachstum wichtig ist. Die zumindest eine Trägerfläche mit den darauf angeordneten Schneidelementen, die sich stirnseitig am Grundkörper befindet, übernimmt die primäre Schneidarbeit. An der an die zumindest eine Trägerfläche anschließenden zumindest einen Gleitfläche gleitet geschnittenes Erdreich oberhalb am Grundkörper ab. Unterhalb am Grundkörper ist aufgrund des gegebenen Winkels zur Trägerfläche ein Abstand zum Erdreich gegeben, welcher sich im Anschluss an den Übergang von der zumindest einen Trägerfläche zur daran anschließenden Gleitfläche vergrößert. Diese Abstandsvergrößerung kann vorzugsweise kontinuierlich verlaufen, sodass sich ein Abstand einer Unterseite der zumindest einen Gleitfläche zum Erdreich stetig vergrößert. Eine Ebene der Oberfläche des Erdreichs, zu welcher sich der Abstand vergrößert, entspricht dabei der erwähnten gedanklichen Bezugsebene. Im Einsatz des Bodenbearbeitungsgerätes fällt die gedankliche Bezugsebene mit der Oberfläche des bearbeiteten Erdreichs zusammen. Besonders bevorzugt ist in diesem Zusammenhang, dass die zumindest eine Gleitfläche zumindest in einzelnen Bereichen mit einem Winkel von zumindest 125°, vorzugsweise zumindest 130°, insbesondere zumindest 142,5°, vorzugsweise 150° bis 165°, an die zumindest eine Trägerfläche anschließt. Dadurch kann bei guter Schnittleistung und Abgleiten von Erdreich über die zumindest eine Gleitfläche gleichzeitig eine unerwünschte Versiegelung des geschnittenen Erdreichs vermieden werden.

Bevorzugt ist es des Weiteren, dass in Seitenansicht ein abgekanteter Bereich an der Rückseite über der Bezugsebene liegt. Dies kann sich insbesondere dann ergeben, wenn die zumindest eine Gleitfläche mit einem vorbestimmten Winkel an die zumindest eine Trägerfläche anschließt, sodass insbesondere eine kontinuierlich ansteigende Beabstandung zur Rückseite hin gegeben ist.

Die Abkantung an der Rückseite kann in Bezug auf die gedankliche Bezugsebene von dieser weg oder zu dieser hin gerichtet sein. Auch Mischformen, bei welchen zumindest ein Teil nach oben und zumindest ein Teil nach unten gerichtet ist, sind möglich. Vorzugsweise ist die Abkantung zur Bezugsebene hin, also nach unten gerichtet. Dadurch wird sichergestellt, dass trotz der Abkantung Erdreich gut über die Gleitfläche abgleiten kann.

Günstig ist es, wenn die Schneidkanten der auf der zumindest einen Trägerfläche angeordneten Schneidelemente in der Bezugsebene liegen. Bevorzugt sind mehrere Schneidelemente vorgesehen. Die Schneidelemente können so angeordnet sein, dass deren Schneidkanten allesamt in einer Ebene liegen, was für einen geraden Schnitt zweckmäßig ist. Die Schneidelemente können dabei auf der zumindest einen Trägerfläche so angeordnet sein, dass diese entlang einer Arbeitsrichtung betrachtet eine zumindest im Wesentlichen v-förmige Anordnung ausbilden. Zweckmäßigerweise bilden die Schneidelemente dabei eine gemeinsame Schneidkante oder zumindest gemeinsame Schneidkantenabschnitte, die sich durch die Aneinanderreihung oder gegebenenfalls auch Überlappung einzelner stirnseitiger Schneidkanten der Schneidelemente ergeben.

Bevorzugt ist es vorgesehen, dass das Bodenbearbeitungsgerät in Draufsicht etwa v-förmig mit zwei Flügeln ausgebildet ist und die Flügel an deren Rückseiten jeweils abgekantet sind, vorzugsweise über eine Länge der gesamten Rückseite des jeweiligen Flügels. Die v-förmige Ausbildung mit zwei Flügeln erlaubt einen einfachen Aufbau des Grundkörpers. Die Flügel können dabei miteinander lösbar verbunden sein. Bevorzugt ist es jedoch, dass der Grundkörper einteilig ausgebildet ist. Bevorzugt besteht der Grundkörper aus einem Stahl. Hierfür kommen vergütete Stähle infrage. Eine Härte liegt bevorzugt im Bereich von 40 HRC bis 50 HRC, insbesondere 43 HRC bis 47 HRC.

Eine v-förmige Ausbildung mit Flügeln erlaubt es insbesondere auch, die Flügel im Bereich der zumindest einen Gleitfläche im Wesentlichen eben auszubilden. Durch eine entsprechende ebene Ausbildung ist eine sehr einfache Gestaltung des Grundkörpers gegeben.

Günstig ist es auch, wenn der Grundkörper eine in Arbeitsrichtung vorlaufende Spitze aufweist, welche zumindest unterhalb der Bezugsebene liegt. Auf dieser Spitze kann ein weiteres Schneidelement angeordnet sein. Die Spitze mit dem gegebenenfalls darauf angeordneten weiteren Schneidelement sorgt dafür, dass bei einem Einsatz diese Spitze mit dem weiteren Schneidelement zuerst in das Erdreich eingreift. Dadurch wird das Erdreich zunächst gebrochen. Für seitlich der Spitze an der zumindest einen, vorzugsweise mehreren Trägerflächen, angeordnete Schneidelemente ist das Erdreich nach dem Eintritt der Spitze daher bereits gebrochen, sodass für diese Schneidelemente eine geringere Belastung gegeben ist. Das an der Spitze befestigte weitere Schneidelement ist aufgrund des zeitlich primären Eingriffs in das Erdreich massiver ausgebildet als die an den Trägerflächen befestigten Schneidelemente. Mit anderen Worten weist das weitere Schneidelement eine größere Masse auf als jedes einzelne der an den Trägerflächen angeordneten Schneidelemente.

Der Grundkörper kann an der Rückseite einen Stiel zur Befestigung an einer landwirtschaftlichen Maschine oder einen Teil derselben, beispielsweise einen Federzinken, aufweisen. Der Stiel schließt im rückseitigen Bereich an einen flächigen Teil des Grundkörpers an und ragt in Bezug auf die Bezugsebene auf. Der Stiel kann eine oder mehrere Öffnungen aufweisen, durch welche Befestigungsmittel zur Befestigung an der landwirtschaftlichen Maschine oder einen Teil derselben zwecks Befestigung geführt werden können. Ist eine Ausbildung mit insbesondere zwei Flügeln gegeben, ist der Stiel zwischen den Flügeln angeordnet. In diesem Fall ist die Ausbildung bevorzugt spiegelsymmetrisch, wobei die Spiegelebene durch die Spitze des Grundkörpers und die Mitte des Stiels verläuft.

In diesem Zusammenhang ist es auch bevorzugt, dass in Draufsicht ein zentraler Steg vorgesehen ist, welcher den Stiel mit einem in Arbeitsrichtung vorlaufenden Teil des Grundkörpers verbindet. Dadurch ist eine zusätzliche Kraftableitung gegeben. Diese führt zu einer guten Kräfteverteilung, was den Grundkörper insgesamt langlebiger macht. Wenn der Grundkörper durch Schmieden erstellt ist, kann der zentrale Steg mitgeschmiedet sein. Möglich ist es aber auch, dass der Grundkörper zunächst ohne oder mit nur Bereichen des zentralen Steges geschmiedet wird, wonach der zentrale Steg oder zumindest ein Teil desselben aufgeschweißt wird.

Die Schneidelemente stehen mit dem weiteren, an der Spitze befestigten weiteren Schneidelement im Einsatz gemeinsam im Schneideingriff. Die Schneidelemente sind bevorzugt aus einem Hartmetall gebildet. Dies gilt auch für das weitere Schneidelement. Gegebenenfalls können die Schneidelemente auch beschichtet sein. Die Schneidelemente sind mit Vorteil allesamt ident ausgebildet. Davon unterscheidet sich das weitere Schneidelement, welches an der Spitze des Grundkörpers angeordnet ist und eine andere Form aufweist. Üblicherweise sind die Schneidelemente wie auch das weitere Schneidelement aus einem Hartmetall gebildet, dass überwiegend Wolframcarbid als Hartstoff aufweist. Übliche Gehalte an Wolframcarbid sind 80 Gewichtsprozent (Gew.-%) bis 95 Gew.-%, beispielsweise 85 Gew.-% bis 92 Gew.-%. Teilweise kann das Wolframcarbid auch durch andere Hartstoffe ersetzt sein, beispielsweise Titancarbid, Tantalcarbid und/oder Niobcarbid. Neben den Hartstoffen ist ein oder sind mehrere Bindemetalle vorgesehen. Ein Bindemetallgehalt liegt üblicherweise im Bereich von 5 Gew.-% bis 20 Gew.-%. Als Bindemetalle kommen Cobalt, Eisen und/oder Nickel infrage. Gegebenenfalls kann im Bindemetall auch Chrom präsent sein. Das weitere Schneidelement ist in der erläuterten Weise an der Spitze des Grundkörpers angebracht. Die Schneidelemente an der zumindest einen Trägerfläche können in geeigneten Plattensitzen befestigt sein. Die Schneidplatten sind bevorzugt so an der zumindest einen Trägerfläche angeordnet, dass diese mit den Schneidkanten zumindest bereichsweise über die zumindest eine Trägerfläche vorstehen, sodass die Schneidkanten im Einsatz frei sind und die erforderliche Schnittarbeit leisten können. Somit sind die Schneidkanten an der zumindest einen Trägerfläche in Arbeitsrichtung bevorzugt über diese vorspringend angeordnet. Die Schneidkanten der Schneidelemente liegen allesamt mit Vorteil in der gedanklichen Bezugsebene, wohingegen das weitere Schneidelement mit dessen Schneidkanten zumindest bereichsweise unterhalb dieser gedanklichen Bezugsebene liegt.

Weitere Merkmale, Vorteile und Wirkungen der Erfindung ergeben sich aus den nachfolgenden Ausführungsbeispielen. In den Zeichnungen, auf welche dabei Bezug genommen wird, zeigen:
Fig. 1 eine erste Variante eines erfindungsgemäßen Bodenbearbeitungsgerätes in einer Ansicht von unten;
Fig. 2 das Bodenbearbeitungsgerät aus Fig. 1 in einer Seitenansicht;
Fig. 3 das Bodenbearbeitungsgerät aus Fig. 1 in einer Draufsicht;
Fig. 4 einen Schnitt entlang der Linie IV-IV in Fig. 3;
Fig. 5 einen Schnitt entlang der Linie V-V in Fig. 1;
Fig. 6 einen Schnitt entlang der Linie VI-VI in Fig. 1;
Fig. 7 einen Schnitt entlang der Linie VII-VII in Fig. 3;
Fig. 8 eine perspektivische Ansicht des Bodenbearbeitungsgerätes gemäß Fig. 1 bis Fig. 7;
Fig. 9 eine weitere Variante eines erfindungsgemäßen Bodenbearbeitungswerkzeuges in einer perspektivischen Darstellung;
Fig. 10 das Bodenbearbeitungsgerät gemäß Fig. 9 in einer perspektivischen Darstellung mit Blick auf eine Unterseite des Bodenbearbeitungsgerätes.

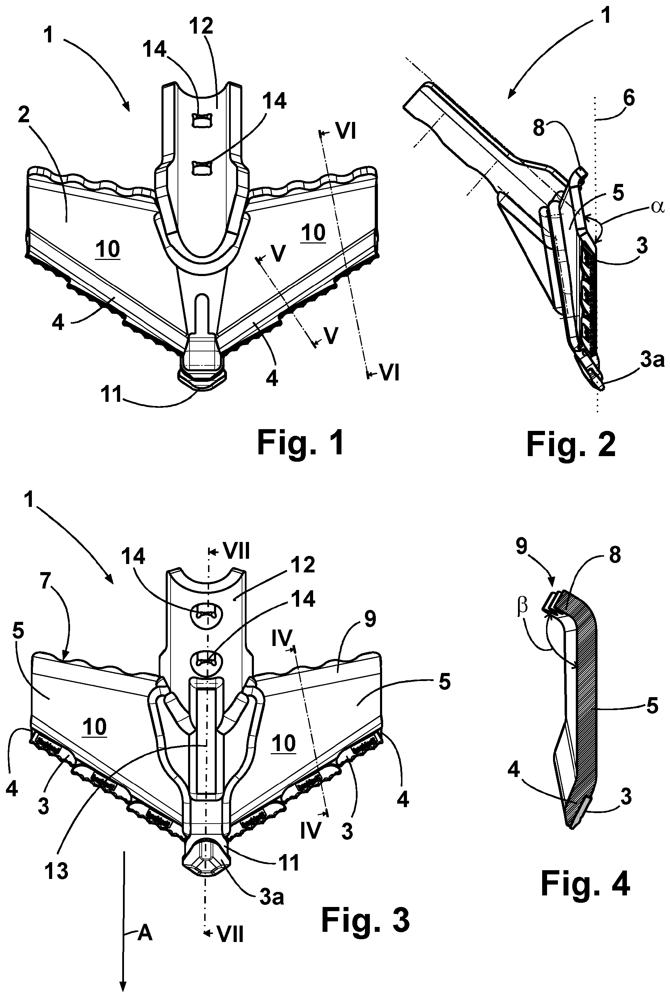

In Fig. 1 bis Fig. 7 ist ein Bodenbearbeitungsgerät gemäß der Erfindung in einer ersten Variante dargestellt. Wie in einer Ansicht von unten gemäß Fig. 1 sowie insbesondere einer Draufsicht gemäß Fig. 3 ersichtlich ist, weist das Bodenbearbeitungsgerät 1 einen Grundkörper 2 auf, der in Draufsicht im Wesentlichen v-förmig ausgebildet ist und in einer integralen Ausbildung einen Stiel 12 umfasst. Der Stiel 12 weist mehrere Öffnungen 14 auf, über welche eine Befestigung des Grundkörpers 2 an einer landwirtschaftlichen Maschine oder einem Teil derselben, beispielsweise einem Federzinken, möglich ist. Der Grundkörper 2 kann mit dem Stiel 12 einteilig durch Schmieden erstellt sein. An einer in Fig. 3 ersichtlichen Oberseite ist der Stiel 12 über einen Steg 13 mit einem in einer Arbeitsrichtung A vorlaufenden Bereich des Grundkörpers 2 verbunden. Dadurch ergibt sich eine gute Krafteinleitung, wenn mit dem Bodenbearbeitungsgerät 1 Erdreich in noch zu erläuternder Weise geschnitten wird. Der Steg 13 kann beispielsweise ebenfalls integral durch Schmieden erstellt sein. Bei komplexen Formen kann der Steg 13 aber auch nach dem Schmieden oder einem anderen formgebenden Prozess angeschweißt werden.

Der Grundkörper 2 ist im Wesentlichen durch zwei Flügel 10 gebildet, welche sich spiegelsymmetrisch zu einer durch eine Spitze 11 des Grundkörpers 2 sowie eine Mitte des Stiels 12 erstrecken. In Draufsicht gemäß Fig. 3 ergibt sich dabei eine im Wesentlichen v-förmige Ausbildung des Grundkörpers 2. Die Flügel 10 weisen an einer Stirnseite, also in Arbeitsrichtung A betrachtet, oder anders ausgedrückt vordersten Bereichen jeweils eine Trägerfläche 4 auf. An jeder Trägerfläche 4 sind Schneidelemente 3 angeordnet. Die Schneidelemente 3 können wie aus beispielsweise Fig. 3 ersichtlich mit gezackten stirnseitigen Schneidkanten ausgebildet sein. Wie insbesondere aus Fig. 2 ersichtlich ist, sind die Schneidelemente 3 so angeordnet, dass deren Schneidkante in einer gedanklichen Bezugsebene 6 liegen, die in Fig. 2 ersichtlich ist. Diese gedankliche Bezugsebene 6 entspricht im Einsatz einer Oberfläche von Erdreich, unter der Voraussetzung, dass dieses im Wesentlichen eben vorliegt. Aus Fig. 2 ergibt sich auch, dass ein an der Spitze 11 befestigtes weiteres Schneidelement 3a mit dessen stirnseitigen Schneidkanten zumindest bereichsweise unterhalb der Bezugsebene 6 liegt. Das weitere Schneidelement 3a ist massiver ausgebildet als die Schneidelemente 3, die einzeln eine geringere Masse als das weitere Schneidelement 3a aufweisen.

Die Flügel 10 des Grundkörpers 2 weisen an der Oberfläche eine Gleitfläche 5 auf. Diese Gleitfläche 5 schließt an die Trägerfläche 4 bzw. deren Teilbereiche an. Die Gleitfläche 5 bildet dabei einen Winkel α mit der Trägerfläche 4 von, je nach Ausführungsvariante, etwa 120° bis 150° aus. Durch diesen Winkel α ergibt sich, dass die Gleitfläche 5 im Anschluss an die Trägerfläche 4 entgegen der Arbeitsrichtung A mit einem zunehmenden Abstand zur gedanklichen Bezugsebene 6 und damit im Einsatz zu einer Oberfläche eines Erdreichs aufweist.

Im Einsatz wird das Bodenbearbeitungsgerät 1 an einer landwirtschaftlichen Maschine oder einem Teil derselben befestigt, beispielsweise einem Federzinken. Üblicherweise werden mehrere Bodenbearbeitungsgeräte 1 gleichzeitig in Einsatz gebracht. Erfolgt ein Eingriff in Erdreich, typischerweise wenige Zentimeter unter einer Erdoberfläche, fährt zunächst die Spitze 11 samt dem weiteren Schneidelement 3a in das Erdreich ein. Dadurch wird das Erdreich aufgebrochen. Da hierbei die größte Belastung auftritt, ist das Schneidelement 3a besonders massiv ausgebildet. Danach kommen die seitlich an der Trägerfläche 4 befestigten Schneidelemente 3 zum Einsatz, die eine Schneidkante bilden, die in einer gemeinsamen Ebene, nämlich der Bezugsebene 6 liegen. Die Schneidelemente 3 werden ebenfalls auf Verschleiß beansprucht und haben zu diesem Zweck stirnseitige Schneidkanten mit Vorsprüngen und Rücksprüngen, was zu einer hohen Standzeit beiträgt. Die Schneidelemente 3 sind ebenso wie das Schneidelement 3a aus einem Hartmetall gefertigt. Die Schneidelemente 3 sind ident ausgebildet und können ebenso wie das weitere Schneidelement 3a durch Löten am Grundkörper 2 befestigt sein, der üblicherweise aus einem Stahl besteht. Da ein Abstand der Gleitflächen 5 zur Bezugsebene 6 entgegen der Arbeitsrichtung A abnimmt, erfolgt ein gerader Schnitt, ohne dass das geschnittene Erdreich durch Andrücken des Grundkörpers 2 wieder komprimiert wird, was nachteilig für einen gewünschten Wassereintritt wäre.

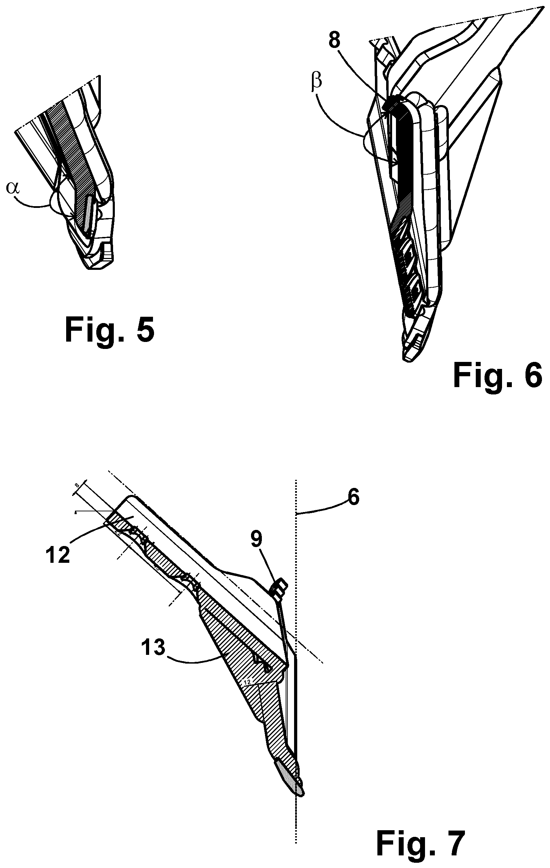

Gemäß der Erfindung ist an einer Rückseite 7 eine Abkantung 8 angeordnet, wie diese beispielsweise in der Seitenansicht gemäß Fig. 2 oder im Querschnitt gemäß Fig. 4 ersichtlich ist. Die Abkantung 8 ist wellenförmig ausgebildet, wenngleich dies nicht zwingend ist und beispielsweise auch eine geradlinige Ausbildung möglich ist. Die Abkantung 8 erstreckt sich zur Bezugsebene 6 hin. Dies bedeutet, dass ein abgekanteter Bereich 9 in Bezug auf die Gleitfläche 5 abfallend ausgebildet ist. Dadurch ist sichergestellt, dass Erdreich trotz der Abkantung gut abgleiten kann. Grundsätzlich wäre es aber auch möglich, dass die Abkantung 8 sich nach oben erstreckt. Ein Winkel β der Abkantung liegt zweckmäßigerweise im Bereich von 120° bis 150°, insbesondere 125° bis 145°, wie dies beispielsweise aus Fig. 4 oder Fig. 6 ersichtlich ist.

Mit der Abkantung 8 bzw. dem abgekanteten Bereich 9 wird eine Versteifung des Grundkörpers 2 erreicht. Dadurch ist es möglich, den Grundkörper ohne Einbußen an Stabilität deutlich leichtgewichtiger zu fertigen. Im Vergleich mit dem Stand der Technik kann der Grundkörper anstatt mit 2,5 kg mit 1,5 kg erstellt werden, was einer erheblichen Gewichtseinsparung entspricht. Diese Gewichtseinsparung schlägt auch auf die landwirtschaftliche Maschine durch, da beispielsweise Federzinken nicht mehr so massiv ausgebildet werden müssen. Somit ist eine leichtgewichtige und dennoch stabile Ausbildung getroffen.

Die Abkantung 8 kann mehrere abgekantete Bereiche 9 umfassen bzw. aus Teilabschnitten bestehen, die als einzelne Abkantungen 8 angesehen werden können.

Die Abkantung 8 ist nach unten hin, also zur Bezugsebene 6 mit einem freien Ende ausgebildet. Gemäß Fig. 1 bis Fig. 7 ist dieses freie Ende wellenförmig ausgebildet. Möglich ist es aber auch, dass an die Abkantung 8 noch ein weiterer Teil des Grundkörpers anschließt.

Durch die Ausbildung der Flügel 10, welche sich unter gleichzeitiger Ausbildung der Gleitfläche 5 an die Trägerfläche 4 anschließend erstrecken, wird eine im Wesentlichen ebene Gleitfläche 5 geschaffen, wie dies insbesondere im Querschnitt in Fig. 4 ersichtlich ist. Daran schließt endseitig der abgekantete Bereich 9 an. Wie in Fig. 7 ersichtlich ist, ergibt sich aufgrund des zunehmenden Abstandes der Gleitfläche 5 zur Bezugsebene 6 entgegen der Arbeitsrichtung A, dass der abgekantete Bereich 9 über der Bezugsebene 6 und damit im Einsatz deutlich über der Oberfläche des bearbeiteten Erdreichs liegt. Das freie, endseitige Ende des Grundkörpers 2 mit dem abgekanteten Bereich 9 kommt daher im Einsatz grundsätzlich mit Erdreich nicht in Berührung.

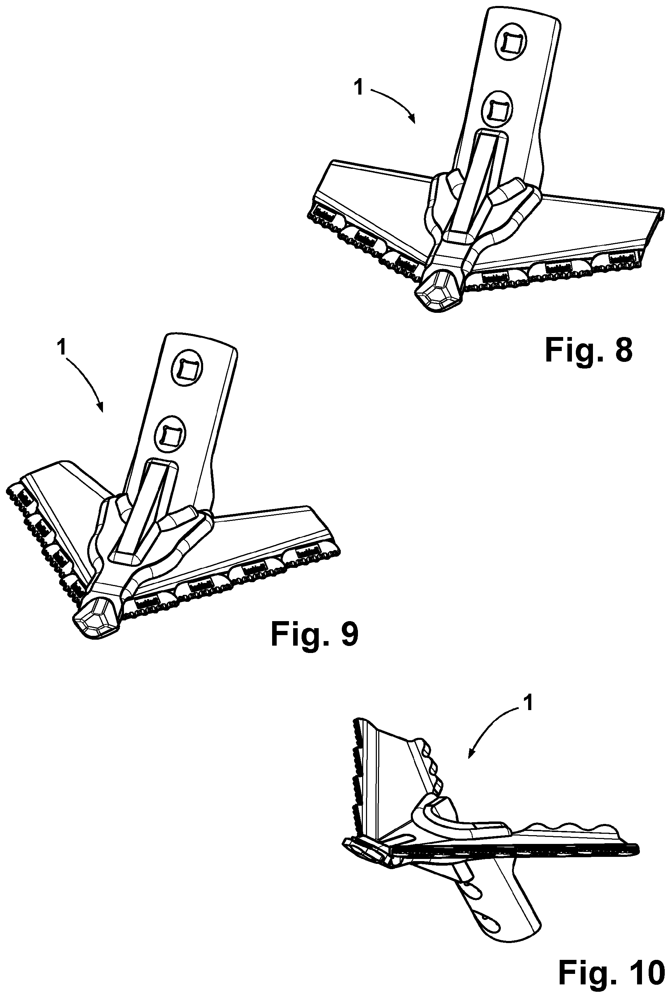

Die Ausbildungsvariante gemäß Fig. 1 bis Fig. 7 ist in Fig. 8 nochmals in perspektivischer Darstellung gezeigt. Fig. 9 und Fig. 10 zeigen hierzu im Vergleich eine weitere Variante eines erfindungsgemäßen Bodenbearbeitungsgerätes 1, wobei die Flügel 10 so angeordnet sind, dass sich im Gegensatz zur ersten Ausführungsvariante gemäß Fig. 1 bis Fig. 8 eine spitze Ausbildung ergibt. Die stumpfe Ausbildung gemäß Fig. 1 bis Fig. 8 weist einen von den Flügeln 10 stirnseitig aufgespannten Winkel von zumindest mehr als 100° auf. Bei der spitzen Ausbildung gemäß Fig. 9 und Fig. 10 beträgt der entsprechende Winkel, der von den Flügeln 10 aufgespannt wird, typischerweise 65° bis 80°. Aufgrund der stirnseitig spitzen Ausbildung des Grundkörpers 2 gemäß den Fig. 9 und Fig. 10 ergibt sich bei einer üblichen Schnittbreite von 200 mm auch, dass mehr Schneidelemente 3 erforderlich sind. Während pro Flügel 10 bei der ersten Variante gemäß Fig. 1 bis Fig. 8 drei Schneidelemente ausreichend sind, sind an den Flügeln 10 der Variante gemäß Fig. 9 und Fig. 10 jeweils vier Schneidelemente 3 pro Flügel 10 vorgesehen. Die konkrete Ausbildung (stumpf oder spitz) hängt davon ab, wie das zu bearbeitende Erdreich gestaltet ist. Sind die auftretenden Kräfte niedriger, kommt bevorzugt die stumpfe Variante zum Einsatz. Sind hingegen aufgrund der Ausbildung des Erdreichs die auftretenden Kräfte höher, kommt bevorzugt die spitze Variante zum Einsatz.

## Patentansprüche

1. Bodenbearbeitungsgerät (1), insbesondere Schar, zur landwirtschaftlichen Aufbereitung von Erdreich, insbesondere zum flächigen Schneiden von Erdreich, umfassend einen Grundkörper (2) sowie auf diesem angeordnete Schneidelemente (3), wobei der Grundkörper (2) zumindest eine stirnseitige Trägerfläche (4) und zumindest eine Gleitfläche (5) aufweist, wobei auf der zumindest einen Trägerfläche (4) Schneidelemente (3) angeordnet sind und wobei über die zumindest eine Gleitfläche (5) Erdreich abgleiten kann, wobei die zumindest eine Trägerfläche (4) an die zumindest eine Gleitfläche (5) abgekantet anschließt, **dadurch gekennzeichnet, dass** die zumindest eine Gleitfläche (5) an einer Rückseite (7) zumindest bereichsweise abgekantet ist.

2. Bodenbearbeitungsgerät (1) nach Anspruch 1, **dadurch gekennzeichnet, dass** die zumindest eine Gleitfläche (5) mit einem Winkel (α) an die zumindest eine Trägerfläche (4) anschließt, sodass sich von der zumindest einen Trägerfläche (4) weg ein Abstand der zumindest einen Gleitfläche (5) relativ zu einer gedanklichen Bezugsebene (6) bis zu einer Abkantung (8) an der Rückseite (7) vergrößert.

3. Bodenbearbeitungsgerät (1) nach Anspruch 1 oder 2, **dadurch gekennzeichnet, dass** die zumindest eine Gleitfläche (5) zumindest in einzelnen Bereichen mit einem Winkel (α) von zumindest 125°, vorzugsweise zumindest 130°, insbesondere zumindest 142,5°, vorzugsweise 150° bis 165°, an die zumindest eine Trägerfläche (4) anschließt.

4. Bodenbearbeitungsgerät (1) nach einem der Ansprüche 1 bis 3, **dadurch gekennzeichnet, dass** in Seitenansicht ein abgekanteter Bereich (9) an der Rückseite (7) über der Bezugsebene (6) liegt.

5. Bodenbearbeitungsgerät (1) nach einem der Ansprüche 1 bis 4, **dadurch gekennzeichnet, dass** Schneidkanten der auf der zumindest einen Trägerfläche (4) angeordneten Schneidelemente (3) in der Bezugsebene (6) liegen.

6. Bodenbearbeitungsgerät (1) nach einem der Ansprüche 1 bis 5, **dadurch gekennzeichnet, dass** das Bodenbearbeitungsgerät (1) in Draufsicht etwa v-förmig mit zwei Flügeln (10) ausgebildet ist und die Flügel (10) an deren Rückseiten (7) abgekantet sind.

7. Bodenbearbeitungsgerät (1) nach Anspruch 6, **dadurch gekennzeichnet, dass** die Flügel (10) im Bereich der zumindest einen Gleitfläche (5) im Wesentlichen eben ausgebildet sind.

8. Bodenbearbeitungsgerät (1) nach einem der Ansprüche 1 bis 7, **dadurch gekennzeichnet, dass** der Grundkörper (2) eine in Arbeitsrichtung (A) vorlaufende Spitze (11) aufweist, welche zumindest teilweise unterhalb der Bezugsebene (6) liegt.

9. Bodenbearbeitungsgerät (1) nach Anspruch 8, **dadurch gekennzeichnet, dass** an der Spitze (11) ein weiteres Schneidelement (3a) angeordnet ist.

10. Bodenbearbeitungsgerät (1) nach einem der Ansprüche 1 bis 9, **dadurch gekennzeichnet, dass** der Grundkörper (2) an der Rückseite (7) einen Stiel (12) zur Befestigung an einer landwirtschaftlichen Maschine oder einen Teil derselben, beispielsweise einen Federzinken, aufweist.

11. Bodenbearbeitungsgerät (1) nach Anspruch 12, **dadurch gekennzeichnet, dass** in Draufsicht ein zentraler Steg (13) vorgesehen ist, welcher den Stiel (12) mit einem in Arbeitsrichtung (A) vorlaufenden Teil des Grundkörpers (2) verbindet.

12. Bodenbearbeitungsgerät (1) nach einem der Ansprüche 1 bis 11, **dadurch gekennzeichnet, dass** die Schneidelemente (3) an der Trägerfläche (4) in Arbeitsrichtung (A) über diese vorspringend angeordnet sind.
